Europäisches Patentamt

European Patent Office    (11) Publication number:    **0 366 207**

Office européen des brevets    **A1**

(19)

(12)    **EUROPEAN PATENT APPLICATION**

(21) Application number: 89202691.5    (51) Int. Cl.⁵: **C10G 47/16 , B01J 29/08**

(22) Date of filing: 24.10.89

(30) Priority: 25.10.88 GB 8824944

(43) Date of publication of application:
02.05.90 Bulletin 90/18

(84) Designated Contracting States:
BE CH DE ES FR GB IT LI NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Huizinga, Tom
Badhuisweg 3
NL-1031 CM Amsterdam(NL)
Inventor: Schaper, Hennie
Badhuisweg 3
NL-1031 CM Amsterdam(NL)
Inventor: Hoek, Arend
Badhuisweg 3
NL-1031 CM Amsterdam(NL)

(74) Representative: Aalbers, Onno et al
P.O. Box 302
NL-2501 CH The Hague(NL)

(54) Process for converting hydrocarbon oils and catalyst for use in such a process.

(57) A process for converting hydrocarbon oils into products of lower average molecular weight and lower average boiling point, comprising contacting a hydrocarbon oil at elevated temperature and pressure in the presence of hydrogen with a hydrocracking catalyst, which catalyst comprises at least one hydrogenation component of a Group VI metal and/or Group VIII metal and zeolite Y particles and a binder which zeolite Y particles have an average crystallite size of less than 0.7 micrometer. Furthermore, the invention also relates to such catalyst.

EP 0 366 207 A1

## PROCESS FOR CONVERTING HYDROCARBON OILS AND CATALYST FOR USE IN SUCH A PROCESS

The present invention relates to a process for converting hydrocarbon oils into products of lower average molecular weight and lower average boiling point in the presence of hydrogen, and a catalyst comprising zeolite Y particles and a binder for use in such a process.

The present invention is particularly directed to overcoming the problem of the increasing utilization of residual oil found in today's crude oil feedstocks.

From European patent specification No. 0 216 938 a catalyst is known for hydrotreating heavy hydrocarbon oils, which catalyst comprises a faujasite type Y zeolite having such particle size distribution that 20 percent by weight (%wt) or less of the particles have a diameter of 3 micrometer or less, between 50 and 70 %wt of the particles have a particle diameter between 3 and 12 micrometer and between 10 and 40 %wt of the particles have a particle diameter between 12 and 30 micrometer, and which catalyst also comprises metal components selected from Group VIA and Group VIII of the Periodic Table of Elements. It is stated in this publication that, in case the particle size distribution deviates from the above described range, the catalytic activity deteriorates.

However, it has now surprisingly been found that catalysts comprising zeolite Y particles and a binder, which zeolite Y particles have an average crystallite size of less than 0.7 micrometer, show an improved selectivity for the conversion of the higher boiling fraction of hydrocarbon feedstocks.

The present invention therefore provides a process for converting hydrocarbon oils into products of lower average molecular weight and lower average boiling point, comprising contacting a hydrocarbon oil at elevated temperature and pressure in the presence of hydrogen with a hydrocracking catalyst, which catalyst comprises at least one hydrogenation component of a Group VI metal and/or Group VIII metal and zeolite Y particles and a binder, which zeolite Y particles have an average crystallite size of less than 0.7 micrometer.

Furthermore, the present invention relates to a catalyst composition comprising zeolite Y particles and a binder and at least one hydrogenation component of a Group VI metal and/or Group VIII metal, which zeolite Y particles have an average crystallite size of less than 0.7 micrometer.

The process according to the invention is particularly suitable for hydrocracking. The products of lower average molecular weight and lower average boiling point obtained in this process include gaseous material, i.e. in general $C_{1-4}$ hydrocarbons, naphtha and a middle distillate fraction, i.e. a kerosine fraction and a gas oil fraction.

The crystallite size of the zeolite Y particles was determined conventionally using Scanning Electron Micrographs (SEM) analysis. When the particles used are spheres the term "crystallite size" refers, of course, to their diameters. More information on this method for measuring the crystallite size can e.g. be found in the article by E.G.Derouane, S.Demmetrie, Z.Gabelica and N.Blom, Appl. Catal., 1 (1981) 201. If agglomeration and/or intergrowths were present in the zeolite Y particles, the size of the particles forming this agglomeration or intergrowth was measured.

The particles suitable for use in the underlying process have an average crystallite size of less than 20.7 micrometer, preferably in the range of from 0.01 to 0.5 micrometer, more preferably in the range of from 0.05 to 0.3 micrometer, more preferably in the range of from 0.2 to 0.3 micrometer. The distribution of the crystallite size is also of influence on the performance of the catalyst particles, and a crystallite size distribution wherein at least 80 percent of the particles have a crystallite size of from 0.1 to 0.4 micrometer is suitable for use in the process, more preferably at least 90 percent of the particles have a crystallite size of from 0.2 to 0.3 micrometer.

The particle size of the catalyst particles can differ between wide ranges. A suitable range of the average catalyst particle size is from 0.8 to 5.0 millimetre.

The catalyst used in the process comprises zeolite Y particles. Zeolites Y which can be used include ultrastable zeolite Y, rare earth exchanged zeolite Y and mixtures thereof. The unit cell size of the zeolite Y is suitably of from 24.19 Å to 24.60 Å, preferably of from 24.19 Å to 24.45 Å, more preferably of from 24.19 Å to 24.35 Å. Such a low unit cell size is known to be preferable in the performance of hydrocracking catalysts for use with feedstocks having a relatively high proportion of higher boiling hydrocarbons, as described in European patent specification No. 0 247 678. The zeolite Y is characterized by the faujasite X-ray diffraction pattern. Preference is given to zeolite Y having a $SiO_2/Al_2O_3$ molar ratio of from 4 to 25, more preferably of from 8 to 15.

The zeolitic catalyst used in the process according to the present invention contains suitably an amount of zeolite Y ranging from 20 to 90% by weight (%wt) and an amount of binder ranging from 10 to 80 %wt, based on the total amount of zeolite Y and binder. In particular, the catalyst contains an amount of zeolite Y ranging from 60 to 85% and an amount of binder ranging from 15 to 40%, based on the total amount of zeolite and binder. Particularly suitable catalyst compositions are described in European patent specification No. 0 247 678.

The zeolite is combined with a hydrogenation component of a group VI and/or group VIII metal. This combining can be carried out by any method known in the art. Preferably this combining is carried out by impregnation or co-mulling. In co-mulling the zeolite is mixed with the hydrogenating component(s) and optionally a binder, in the presence of water, so that an extrudable paste is obtained. A description of co-mulling can be found in United States patent specification No. 3 853 747.

The binder(s) present in the catalyst suitably comprise(s) inorganic refractory oxides or mixtures thereof. Both amorphous and crystalline binders can be applied. Examples of suitable binders comprise silica, alumina, silica-alumina, clays, zirconia, silica-zirconia, titania and silica-boria. Preference is given to the use of alumina as a binder.

When mixtures are employed, preferably a selection is made from alumina, silica-alumina and titania. Silica-alumina does not only act as a binder but also as a cracking component.

The hydrogenation component(s) on the catalyst is (are) selected from the metals of Group VI and VIII of the Periodic Table of the Elements. Suitably the hydrogenating component(s) is (are) chosen from the group consisting of molybdenum, tungsten, cobalt, nickel, palladium and platinum. Preferably a catalyst is used containing nickel and tungsten.

The amount(s) of hydrogenation component(s) in the catalysts suitably range from 0.1 to 40 parts by weight (pbw) of group VIII metal component(s) and from 2 to 40 pbw of group VI metal component(s), calculated as metal(s) per 100 pbw of total catalyst. In particular catalysts comprising as hydrogenation component(s) from 0.5 to 10 pbw of group VIII metal component(s) and from 5 to 20 pbw of group VI metal component(s), calculated as metal(s) per 100 pbw of total catalyst are suitable for use in the process according to the present invention. The hydrogenation components in the catalysts may be in the oxidic and/or the sulphidate state.

Hydrocarbon feedstocks which can be used in the present process include tar oils, vacuum gas oil, deasphalted oils, long residues, short residues, catalytically cracked cycle oils, thermally cracked gas oils, and syncrudes, optionally originating from residue upgrading processes or from tar sands, shale oils, or biomass. Combinations of various hydrocarbon oils can also be employed.

Suitable process conditions for the process comprise temperatures in the range from 250 to 500 °C, hydrogen pressures of up to 300 bar and space velocities between 0.1 and 10 kg feed per litre of catalyst per hour (kg/l.h). Gas/feed ratios of 100 to 5000 Nl/kg feed can suitably be used. Preferably, the hydroconversion process is carried out at a temperature between 270 and 470 °C, a pressure between 25 and 200 bar and a space velocity between 0.2 and 5 kg feed per litre of catalyst per hour. Preferably, gas/feed ratios between 250 and 2000 Nl/kg are applied.

The present invention will now be illustrated by means of the following Examples.

## EXAMPLE 1

In this example five catalysts are produced. Catalysts A, B and C are according to the invention.

## Catalyst A

806.5 grams of a stabilized crystalline synthetic zeolite Y, having a unit cell size of 24.33 Å, a sodium oxide content of 0.06% by weight (%wt), a molar silica to alumina ratio of 8.8, a loss on ignition of 25.6 %wt and an average crystallite size of 0.3 micrometer was mixed with 202.0 g hydrated aluminium oxide with a loss on ignition of 25.8 %wt. To this mixture 311 g of a solution was added, containing 95.3 g WO$_3$ as ammonium metatungstate and 28.1 g of NiO as nickel nitrate. After mulling this mixture for 5 minutes a mixture of 7.5 g of acetic acid and 262 g of water was added and mulling was continued for 40 minutes. Subsequently this mixture was extruded yielding 1.7 mm extrudates. The extrudates were dried for 2 hours at 120 °C and finally calcined for 2 hours at 500 °C. The weight ratio of zeolite Y and binder was 80/20 and the calcined extrudates contained 2.6 %wt Ni and 8.2 %wt W, calculated as metals on total catalyst.

## Catalyst B

3

Catalyst B was obtained by crushing and sieving catalyst A so that particles were obtained having an average particle size of 0.3 millimetre (40-60 mesh, Tyler equivalents).

Catalyst C

735.3 grams of a stabilized crystalline synthetic zeolite Y, having a unit cell size of 24.34 Å, an average crystallite size of 0.3 micrometer, a molar silica to alumina ratio of 9.8, a sodium oxide content of 0.065% by weight (%wt) and a loss on ignition of 18.4 %wt was mixed with 202.2 g hydrated aluminium oxide with a loss on ignition of 25.8 %wt. To this mixture 311 g of a solution was added, containing 95.3 g $WO_3$ as ammonium metatungstate and 28.1 g of NiO as nickel nitrate. After mulling this mixture for 5 minutes a mixture of 7.5 g of acetic acid and 262 g of water was added and mulling was continued for 40 minutes. Subsequently this mixture was extruded yielding 1.7 mm extrudates. The extrudates were dried for 2 hours at 120 °C and finally calcined for 2 hours at 500 °C. The weight ratio of zeolite Y and binder was 80/20 and the calcined extrudates contained 2.6 %wt Ni and 8.2 %wt W, calculated as metals on total catalyst.

Catalyst D

685.7 grams of a stabilized crystalline synthetic zeolite Y having a unit cell size of 24.33 Å, a sodium oxide content of 0.05% by weight (%wt), a molar silica to alumina ratio of 9.6, a loss on ignition of 12.5 %wt and an average crystallite size of 1.0 micrometer was mixed with 202.0 g hydrated aluminium oxide with a loss on ignition of 25.8 %wt. To this mixture 311 g of a solution was added, containing 95.3 g $WO_3$ as ammonium metatungstate and 28.1 g of NiO as nickel nitrate. After mulling this mixture for 5 minutes a mixture of 7.5 g of acetic acid and 262 g of water was added and mulling was continued for 40 minutes. Subsequently this mixture was extruded yielding 1.7 mm extrudates. The extrudates were dried for 2 hours at 120 °C and finally calcined for 2 hours at 500 °C. The weight ratio of zeolite Y and binder was 80/20 and the calcined extrudates contained 2.6 %wt Ni and 8.2 %wt W, calculated as metals on total catalyst.

Catalyst E

Catalyst E was obtained by crushing and sieving catalyst D so that particles were obtained having an average particle size of 0.3 millimetre (40-60 mesh, Tyler equivalents).

EXAMPLE 2

The catalysts described in Example 1 were tested in a hydrocracking experiment using a hydrocarbon feedstock having the following characteristics:
C (%wt) : 86.2
H (%wt) : 13.8
d (70/4) : 0.826
viscosity (100 °C) : 4.87 cS (ASTM-D-445)
viscosity ( 60 °C) : 12.43 cS (ASTM-D-445)
RCT (%wt) : 0.05 (ASTM-D-542)
I.B.P. (°C) : 205
10/20 (°C) : 332/370
30/40 (°C) : 392/410
50/60 (°C) : 428/448
70/80 (°C) : 467/492
90 (°C) : 525
F.B.P. (°C) : 598
The catalyst was diluted with 0.2 mm SiC particles on a 1:1 volume ratio. The catalyst was then presulphided. The subsequent hydrocracking was carried out under the following operation conditions:
WHSV : 1.1 $kg.l^{-1}.h^{-1}$
$H_2S$ partial pressure : 1.4 bar
total pressure : 130 bar

4

gas/feed ratio : 1,000 Nlkg$^{-1}$

The experiment was carried out in once-through operation.

A performance of the catalyst which is measured, is the temperature required to achieve 70% by weight conversion of 300 $^\circ$C$^-$ material. The results are indicated in Table 1.

To indicate the usefulness of the process according to the present invention for the conversion of heavy hydrocarbons, the conversion of hydrocarbons boiling above 300 $^\circ$C and the conversion of hydrocarbons boiling above 530 $^\circ$C is measured. These conversions are defined as follows:

$$\frac{C\ 300\ ^\circ C^+_{in}\ -\ C\ 300\ ^\circ C^+_{out}}{C\ 300\ ^\circ C^+_{in}}$$

and

$$\frac{C\ 530\ ^\circ C^+_{in}\ -\ C\ 530\ ^\circ C^+_{out}}{C\ 530\ ^\circ C^+_{in}}$$

in which "in" means going into the reactor, "out" means coming out of the reactor, C 300 $^\circ$C$^+$ means the content of hydrocarbons boiling above 300 $^\circ$C and 530 $^\circ$C$^+$ means the content of hydrocarbons boiling above 530 $^\circ$C.

The ratio of these two conversions for catalysts A-E is also given in Table 1.

TABLE 1

| Experiment No. | 1 | 2 | 3 | 4 | 5 |
|---|---|---|---|---|---|
| Catalyst | A | B | C | D | E |
| Temperature required (70 %wt conv.), $^\circ$C | 323 | 326 | 332 | 325 | 325 |
| Distribution of 300 $^\circ$C$^-$ product, %wt | | | | | |
| C$_{1-4}$ | 8 | 7 | 6 | 6 | 6 |
| C$_5$-300 $^\circ$C | 92 | 93 | 94 | 94 | 94 |
| 530$^+$/300$^+$ conv. ratio | 0.71 | 0.73 | 0.9 | 0.55 | 0.57 |

From the 530$^+$/300$^+$ conversion ratios shown in Table 1 it can be concluded that the catalysts A, B and C according to the invention show improved selectivity for conversion of the heavier boiling fraction of the hydrocarbon feedstock.

Furthermore, it can be concluded from the results shown in Table 1 that, when smaller catalyst particles containing particles zeolite Y of the same crystallite size are used in the process, the selectivity for the conversion of the heavier boiling fraction does not substantially improve. If, however, catalyst particles of the same size are used containing particles zeolite Y of smaller crystallite size the selectivity improves significantly.

**Claims**

1. A process for converting hydrocarbon oils into products of lower average molecular weight and lower average boiling point, comprising contacting a hydrocarbon oil at elevated temperature and pressure in the presence of hydrogen with a hydrocracking catalyst, which catalyst comprises at least one hydrogenation component of a Group VI metal and/or Group VIII metal and zeolite Y particles and a binder, which zeolite Y particles have an average crystallite size of less than 0.7 micrometer.

2. A process according to claim 1 wherein the zeolite Y particles have an average crystallite size in the range of from 0.01 to 0.5 micrometer.

5

3. A process according to claim 1 or 2 wherein the zeolite Y is selected from the group comprising ultra-stable zeolite Y, rare earth exchanged zeolite Y and mixtures thereof.

4. A process according to any one of claims 1 to 3 wherein use is made of a zeolite Y having a unit cell size of from 24.19 Å to 24.60 Å.

5. A process according to any one of claims 1 to 4, wherein use is made of a catalyst comprising as a binder an inorganic refractory oxide.

6. A process according to claim 5 wherein use is made of a catalyst comprising as a binder one or more compounds selected from the group comprising silica, alumina, silica-alumina, clays, zirconia, silica-zirconia, titania, silica-boria and mixtures thereof.

7. A process according to any one of claims 1 to 6 wherein use is made of a catalyst comprising from 0.1 to 40 parts by weight (pbw) of hydrogenation component(s) of Group VIII metals and/or from 2 to 40 pbw of hydrogenation component(s) of Group VI metals, calculated as metal(s) per 100 pbw of total catalyst.

8. A process according to any one of claims 1 to 7 wherein use is made of a catalyst comprising one or more of the metals of the group consisting of nickel, cobalt, molybdenum, tungsten, platinum and palladium.

9. A process according to any one of claims 1 to 8 wherein the conversion is carried out at a temperature between 250 and 500 °C and the hydrogen pressure is up to 300 bar, the space velocity is from 0.1 to 10 kg feed per litre catalyst per hour and the $H_2$/feedstock ratio is from 100 to 5000 Nl/kg.

10. A catalyst composition comprising zeolite Y particles and a binder and at least one hydrogenation component of a Group VI metal and/or Group VIII metal, which zeolite Y particles have an average crystallite size of less than 0.7 micrometer.

11. A catalyst composition according to claim 10 comprising zeolite Y particles having an average crystallite size in the range of from 0.01 to 0.5 micrometer.

12. A catalyst composition according to claim 10 or 11 comprising zeolite Y selected from the group comprising ultrastable zeolite Y, rare earth exchanged zeolite Y and mixtures thereof.

13. A catalyst composition according to any one of claims 10 to 12 comprising zeolite Y particles having a unit cell size of from 24.19 Å to 24.60 Å.

14. A catalyst composition according to any one of claims 10 to 13 comprising as a binder an inorganic refractory oxide.

15. A catalyst composition according to claim 14 comprising as a binder one or more compounds selected from the group comprising silica, alumina, silica-alumina, clays, zirconia, silica-zirconia, titania, silica-boria and mixtures thereof.

16. A catalyst composition according to any one of claims 10 to 15 comprising from 0.1 to 40 parts by weight (pbw) of hydrogenation component(s) of Group VIII metals and/or from 2 to 40 pbw of hydrogenation component(s) of Group VI metals, calculated as metal(s) per 100 pbw of total catalyst.

17. A catalyst composition according to any one of claims 10 to 16 comprising one or more of the metals of the group consisting of nickel, cobalt, molybdenum, tungsten, platinum and palladium.

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 204 236 (GRACE & CO.)<br>* Claims; page 7, lines 3-9 *<br>--- | 1-17 | C 10 G 47/16<br>B 01 J 29/08 |
| Y | PATENT ABSTRACTS OF JAPAN, vol. 9, no. 71 (C-272)[1794], 30th March 1985; & JP-A-59 203 639 (CHIYODA KAKO KENSETSU)<br>--- | 1-17 | |
| D,A | EP-A-0 247 678 (SHELL)<br>* Claims *<br>----- | 1-17 | |

TECHNICAL FIELDS SEARCHED (Int. Cl.5)

C 10 G
B 01 J

The present search report has been drawn up for all claims

| Place of search | Date of completion of the search | Examiner |
|---|---|---|
| THE HAGUE | 26-01-1990 | MICHIELS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)